# EUROPEAN PATENT SPECIFICATION

(11) **EP 2 308 454 B1**
(45) Date of publication and mention of the grant of the patent: **01.08.2018**
(21) Application number: 10012957.6
(22) Date of filing: 23.11.2004
(51) Int. Cl.: A61K 6/083, A61C 13/15, A61K 6/087, A61C 13/00

(54) **METHOD OF FORMING A DENTAL PRODUCT**
METHODE ZUR HERSTELLUNG EINES DENTALPRODUKTS
PROCÉDÉ DE PRODUCTION D'UN PRODUIT DENTAIRE

(30) Priority: 26.11.2003 US 722830
(43) Date of publication of application: 13.04.2011
(62) Divisional of application: 04812136.2
(73) Proprietor: DENTSPLY SIRONA Inc., York, PA 17401-2991 (US)
(72) Inventor: Sun, Benjamin, J., York PA 17402 (US); Lichkus, Andrew, M., York PA 17404 (US)
(74) Representative: Blodig, Wolfgang

(56) References cited:
- EP-A- 0 554 890
- WO-A-03/082142
- US-A- 4 843 136
- US-A- 5 554 665
- US-A1- 2003 190 585
- MOSZNER N ET AL: "SYNTHESIS, CHARACTERIZATION AND POLYMERIZATION OF WAXY MONOMERS", ANGEWANDTE MAKROMOLEKULARE CHEMIE. APPLIED MACROMOLECULAR CHEMISTRY AND PHYSICS, WILEY VCH,WEINHEIM, DE, vol. 245, March 1997 (1997-03), pages 155-164, XP000692240, ISSN: 0003-3146

## Description

The invention relates to the subject matter of claims 1 to 7, in particular to a method of making dental night guards and splints. The invention provides an improved method of making a dental night guard and a dental splint, which are light curable.

US2003/0190585A1 discloses a method of making a dental product.

The invention uses dental compositions, which are preformed and/or to be formed into tooth restorative fillings, adhesives, cements, sealants, crowns, bridges, full dentures, partial dentures, denture liners, custom trays, artificial teeth, repairs for natural teeth, veneers, denture repairs, denture reline, night guards, splints, retainers, orthodontic components, provisional dental devices, inlays, onlays, orthodontic appliances, oral orthopedic appliances, temporary dentures, temporary partial dentures, maxillofacial prostheses, obturators, and occular prostheses.

The invention uses dental compositions, which are adapted to be light cured to form dental night guards and dental splints in patients' mouths. The flexibility and softness of these dental night guards and dental splints enables them to be readily removable from a patient's mouth without discomfort to the patient. Light curing of the polymerizable materials used to form these dental night guards and dental splints enables them to be readily shaped to the form of a patient's mouth. Preferably they are at least partially cured before removing them from the mouth to better retain their shape. After being removed from the mouth they may be further shaped and further cured.

Beneficially, light curing polymerizable material allows the user to, at least partially, cure the material in the mouth, when it has the most desired shape. Thus, the user has selective control of the curing of the material. Advantageously, selected separate portions (amounts, zones, regions or areas) of the material may be effectively partially or completely polymerized without effectively partially or completely polymerizing (or curing) the remainder of the material to be formed into a dental night guard or dental splint. Thus, the portions polymerized retain their form, while the remainder of the material may be further shaped and formed to improve the fit of the dental night guard or dental splint to the patient.

Dental compositions useful in accordance with the invention may include organic or inorganic filler particles or fibers. Dental compositions useful in accordance with the invention preferably include more than 5 percent by weight of one or more semicrystalline polymerizable compounds. Dental compositions useful in accordance with the invention preferably are dimensionally stable below 36°C and effectively fluid above 40°C.

"Flexural strength", and "flexural modulus" as used herein refers to results of testing according to ASTM D790 (1997). "Compliance" as used herein refers to the inverse of flexural modulus.

Dental compositions useful in accordance with the invention may include from 0 to about 95 percent by weight filler particles. In a preferred embodiment of the invention polymerizable dental compositions useful in accordance with the invention include from about 5 to about 90 percent by weight filler. More preferably, these polymerizable dental materials include from about 20 to about 85 percent by weight filler. Most preferably, these polymerizable dental materials include from about 40 to about 80 percent by weight filler.

The filler particles preferably include organic and/or inorganic particles, and preferably reduce polymerization shrinkage, improve wear resistance and modify the mechanical and physical properties. Preferred fillers are polymers, glasses formed from or including, barium, calcium, strontium, lanthanum, tantalum, and/or tungsten silicates and aluminates and/or aluminosilicates, silica, quartz, ceramics, nanoparticles. Peferably the filler particles have a range of particle sizes of from 0.01 micrometers to 100 micrometers.

### Detailed Description of the Invention

Preformed curable dental devices and sheets for making curable dental devices may be stored in packages or below solidification temperatures. For example, preformed curable dental devices and sheets for making curable dental devices may be stored at solidification temperatures at and below 35°C.

Flexible dental polymeric material useful in accordance with the invention has a flexural modulus in order of increasing preference of less than 1724; 1379; 1172 MPa (250,000; 200,000; 170,000 psi), and a flexural strength in order of increasing preference of less than 55; 48; or 41 MPa (8,000; 7,000; or 6,000 psi) at 23°C. Flexible dental polymeric material useful in accordance with the invention has a flexural modulus in order of increasing preference of less than 1724; 1379; 1034; 689; 552; 345; or 276 MPa (250,000; 200,000; 150,000; 100,000; 80,000; 50,000 or 40,000 psi), and a flexural strength in order of increasing preference of less than 48; 41; 34; 28; 21 or 14 MPa (7,000; 6,000; 5,000; 4,000; 3,000 or 2,000 psi) at 37°C.

Flexible dental polymeric material useful in accordance with the invention has a flexural modulus in order of increasing preference of at least 69; 138; or 345 MPa (10,000; 20,000; or 50,000 psi), and a flexural strength in order of increasing preference of at least 0.7; 1.4; or 3.4 MPa (100; 200; or 500 psi) at 23°C. Flexible dental polymeric material useful in accordance with the invention has a flexural modulus in order of increasing preference of at least 34; 68; or 172 MPa (5,000; 10,000; or 25,000 psi), and a flexural strength in order of increasing preference of at least 0.14; 0.34; or 0.69 MPa (20; 50; or 100 psi) at 37°C.

Dental polymerizable material useful in accordance with the invention is shaped and polymerized to form a night guard and/or a splint. Preferably polymerizable material useful in accordance with the invention is dimensionally stable and moldable under finger pressure at 23°C-37°C. Preferably while it is at 45°C it is flowable. Preferably it cools sufficiently from 45°C within 0.1 to 20 minutes in an air atmosphere at 23°C to become dimensionally stable.

The invention provides a method of shaping a polymerizable composition to form a shape of a dental product. The polymerizable composition is adapted to form polymeric material, which at 37°C has a flexural modulus of less than 1724 MPa (250,000 psi) and a flexural strength of less than 55 MPa (8,000 psi). Preferably the polymerizable composition effectively does not flow without application of more than 6.9 Pa (0.001 psi) of pressure on the composition to force the composition to flow, and the composition is moldable by a pressure of at least 6895 Pa (1 psi). Preferably the flexural modulus of the polymeric material and the flexural strength of the polymeric material are at least 20 percent less at 37°C than at 23°C. More preferably the flexural modulus of polymeric material and the flexural strength of the polymeric material are at least 50 percent less at 37°C than at 23°C. Most preferably the flexural modulus of the polymeric material and the flexural strength of the polymeric material are at least 70 percent less at 37°C than at 23°C.

Preferably polymeric material useful in accordance with the invention has a flexural modulus at 37°C of less than 689 MPa (100,000 psi) and a flexural strength at 37°C of less than 34 MPa (5,000 psi). More preferably the polymeric material at 37°C has a flexural modulus of less than 414 MPa (60,000 psi) and a flexural strength of less than 21 MPa (3,000 psi). Most preferably the polymeric material at 37°C has a flexural modulus of less than 276 MPa (40,000 psi) and a flexural strength of less than 13.8 MPa (2,000 psi).

Dental polymeric material useful in accordance with the invention has a compliance in order of increasing preference of at least 0.58 x 10⁻⁵ N/cm²; 1.45 x 10⁻⁵ N/cm²; or 2.9 x 10⁻⁵ N/cm² (4 x 10⁻⁶in²/pound; 1 x 10⁻⁵in²/pound; or 2 x 10⁻⁵in²/ pound) at 37°C.

The invention provides a method of shaping a polymerizable composition to form a shape of a polymerizable dental product. The polymerizable composition is adapted to form polymeric material, which at 23°C preferably has a flexural modulus of less than 1724 MPa (250,000 psi) and a flexural strength of less than 55 MPa (8,000 psi).

The polymerizable composition is adapted to form polymeric material, which at 37°C preferably has a flexural modulus of less than 1724 MPa (250,000 psi) and a flexural strength of less than 55 MPa (8,000 psi).

In the following examples, unless otherwise indicated, all parts and percentages are by weight; Lucirin TPO refers to 2,4,6-trimethylbenzoyldiphenylphosphine oxide made by BASF.

### PREPARATION 1 - Preparation of TBDMA Oligomer (Reference)

A reactor is charged with 1176 grams of trimethyl-1,6-diisocyanatohexane (5.59 mol) and 1064 grams of bisphenol A propoxylate (3.09 mol) under dry nitrogen flow and heated to about 65°C under positive nitrogen pressure. To this reaction mixture, 10 drops of catalyst dibutyltin dilaurate are added. The temperature of the reaction mixture is maintained between 65°C and 140°C for about 70 minutes and followed by additional 10 drops of catalyst dibutyltin dilaurate. A viscous paste-like isocyanate end-capped intermediate product is formed and stirred for 100 minutes. To this intermediate product, 662 grams (5.09 mol) of 2-hydroxyethyl methacrylate and 7.0 grams of BHT as an inhibitor are added over a period of 70 minutes while the reaction temperature is maintained between 68°C and 90°C. After about five hours stirring under 70°C, the heat is turned off, and TBDMA oligomer is collected from the reactor as semi-translucent flexible solid and stored in a dry atmosphere.

### PREPARATION 2 - Preparation of Monomer (Reference)

A reaction flask is charged with 151.25 grams of octadecyl isocyanate and heated to about 70°C under a positive nitrogen pressure. To this reactor are added 125.3 grams of caprolactone 2-(methacryloyloxy)ethyl ester, 0.12 gram of catalyst dibutyltin dilaurate and 0.58 grams of butylated hydroxy toluene (BHT). The addition is slow and under dry nitrogen flow over a period of two hours. The temperature of the reaction mixture is maintained between 70°C and 85°C for another 2.5 hours, the reaction product is discharged as clear liquid into plastic containers and cooled to form a semi-opaque solid and stored in a dry atmosphere.

### Example 1. Polymerizable Material (Reference)

A light curable polymerizable material is prepared by stirring at 85°C a liquid of 100.0 grams of TBDMA oligomer prepared by following the procedure of Preparation 1, 0.35 gram of 2,4,6- trimethylbenzoyldiphenylphosphine oxide, (Lucirin TPO made by BASF).

### Example 2. Polymerizable Material (Reference)

A light curable polymerizable material is prepared by stirring at 85°C a liquid of 100.0 grams of TBDMA oligomer prepared by following the procedure of Preparation 1, 0.25 gram of 2,4,6- trimethylbenzoyldiphenylphosphine oxide (Lucirin TPO made by BASF) and 1.0 gram of visible light initiating solution. Visible light initiating solution contains 13.3% camphorquinone (CQ), 23.0% methacrylic acid (MAA), 1.3% butylated hydroxytoluene (BHT), 46% N, N-dimethylaminoethylneopentyl acrylate, 16.3% γ-methacryloxypropyltrimethoxysilane and 66.7% 1,6-hexanediol dimethacrylate (HDDMA).

### Example 3. Polymerizable Material (Reference)

A light curable polymerizable material is prepared by stirring at 85°C a liquid of 94.0 grams of TBDMA oligomer prepared by following the procedure Preparation 1, 3.65 grams of octadecyl acrylate (ODA) and 2 grams of monomer prepared by following the procedure of Preparation 2, 0.25 gram of 2,4,6-trimethylbenzoyldiphenylphosphine oxide, (Lucirin TPO made by BASF) and 1.0 gram of visible light initiating solution. Visible light initiating solution contains 13.3% camphorquinone (CQ), 23.0% methacrylic acid (MAA), 1.3% butylated hydroxytoluene (BHT), 46% N, N-dimethylaminoethylneopentyl acrylate, 16.3% γ-methacryloxypropyltrimethoxysilane and 66.7% 1,6-hexanediol dimethacrylate (HDDMA).

### Example 4. Polymerizable Material (Reference)

A light curable polymerizable material is prepared by stirring at 85°C a liquid of 65.0 grams of TBDMA oligomer prepared by following the procedure of Preparation 1, 35.0 grams of monomer prepared by following the procedure of Preparation 2, 4 grams of octadecyl acrylate (ODA), 0.35 gram of 2,4,6-trimethylbenzoyldiphenylphosphine oxide (Lucirin TPO, made by BASF), and 0.65 gram of visible light initiating solution. Visible light initiating solution contains 13.3% camphorquinone (CQ), 23.0% methacrylic acid (MAA), 1.3% butylated hydroxytoluene (BHT), 46% N, N-dimethylaminoethylneopentyl acrylate, 16.3% γ-methacryloxypropyltrimethoxysilane and 66.7% 1,6-hexanediol dimethacrylate (HDDMA).

### Example 5. Polymerizable Material (Reference)

A light curable polymerizable material is prepared by stirring at 85°C a liquid of 62.3 grams of TBDMA oligomer prepared by following the procedure of Preparation 1, 26.0 grams of monomer formed by following the procedure of Preparation 2, 2.0 grams of octadecyl acrylate (ODA), 9.0 grams of Genomer 4246 (urethane acrylate sold by Rahn AG), 0.35 gram of 2,4,6-trimethylbenzoyldiphenylphosphine oxide (Lucirin TPO, made by BASF), and 0.35 gram of visible light initiating solution. Visible light initiating solution contains 13.3% camphorquinone (CQ), 23.0% methacrylic acid (MAA), 1.3% butylated hydroxytoluene (BHT), 46% N, N-dimethylaminoethylneopentyl acrylate, 16.3% γ-methacryloxypropyltrimethoxysilane and 66.7% 1,6-hexanediol dimethacrylate (HDDMA).

### Example 6. Polymerizable Material (Reference)

A light curable polymerizable material is prepared by stirring at 85°C a liquid of 38.75 grams of TBDMA oligomer prepared by following the procedure of Preparation 1, 40.0 grams of monomer prepared by following the procedure of Preparation 2, 20 grams of CN962 urethane acrylate (sold by Sartomer Company, Inc.), 0.25 gram of 2,4,6- trimethylbenzoyldiphenylphosphine oxide (Lucirin TPO, made by BASF), and 1.0 gram of visible light initiating solution. Visible light initiating solution contains 13.3% camphorquinone (CQ), 23.0% methacrylic acid (MAA), 1.3% butylated hydroxytoluene (BHT), 46% N, N-dimethylaminoethylneopentyl acrylate, 16.3% γ-methacryloxypropyltrimethoxysilane and 66.7% 1,6-hexanediol dimethacrylate (HDDMA).

### Example 7. Preformed Polymerizable Laminated Splint with Flexible and rigid layers (Reference)

15 g of polymerizable material formed by following the procedure of Example 3 is formed into a 2 mm thick sheet, warmed to 37°C and then shaped in a splint shaped mold. Then 15 g of polymerizable material formed by following the procedure of Example 4 is formed into a 2mm thick sheet, warmed to 37°C and then applied onto the splint shaped sheet to form a preformed polymerizable laminated splint having flexible and rigid layers.

### Example 8. Flexible Polymeric Night guard (Reference)

A) A two part plaster cast model of a patient's teeth is formed and coated with a release agent. 15 grams of polymerizable composition formed by following the procedure of Example 5 is formed into a 2 mm thick sheet, applied over the cast two part model, and shaped using finger pressure and trimming to form a polymerizable night guard. The polymerizable composition is further adapted to the two part model as the model is articulated.

B) Air barrier coating (sold by Dentsply International under the trademark: Eclipse) is painted onto the polymerizable night guard and onto the cast. While on the cast the polymerizable night guard is then cured for 10 minutes in a light curing unit (sold by Dentsply International under the trademark: Eclipse). The polymeric night guard formed is clear. It is then washed with water to remove all traces of Air Barrier Coating. The night guard is then finished and polished.

### Example 9. Laminated Polymeric Night Guard Having Flexible And Rigid Layers (Reference)

A shaped rigid layer of a night guard is prepared by following the procedure of Example 8 part A, except that 10 g of the product composition formed by following the procedure of Example 4 is used in place of that of Example 5. Then the shaped rigid layer of a night guard is cured in a light unit (sold by Dentsply International under the trademark: Eclipse) for 4 minutes. 5 grams of the product composition of Example 1 is applied to the partially cured shaped rigid layer of a night guard while warm. The applied composition is shaped using finger pressure and trimming to form a night guard. Mold release agent is applied to the incisal and occlusal surface of the opposing cast model. The night guard is examined and adjusted to fit articulator. Then the two layer night guard is cured on the cast model by following the procedure of Example 8 part B.

### Example 10. Night guard having Flexible and rigid Layers Formed from a Polymerizable Laminate (Reference)

A plaster cast of a patient's teeth is coated with a release agent. 20 grams of the laminated product composition formed by following the procedure of Example 7 is applied over the cast. The composition is shaped using finger pressure and trimming to form a night guard. When adapting resin to articulated models, mold release agent is applied to the incisal and occlusal surface of the opposing model. Then the two layer night guard is cured on the cast model by following the procedure of Example 8 part B.

### Example 11. Flexible Night Guard Partially Cured in the Mouth

15 grams of the product composition formed by following the procedure of Example 5 is shaped into an arch and applied over teeth arch in patient's mouth. The composition is shaped using finger pressure and trimming to form a night guard. After the night guard is examined and adjusted to fit inside the mouth, it is partially cured in the mouth for 2 minutes using a handheld light (sold by Dentsply International under the trademark: ProLite). The partially cured night guard is then removed from the mouth. Then the partially cured night guard is cured on the model by following the procedure of Example 8 part B.

### Example 12. Flexible Night Guard Partially Cured in the Mouth (Reference)

A night guard is cured on a model by following the procedure of Example 11, and pouring fast-set plaster into the back of partially cured night guard arch to form a model, just prior to curing on the model by following the procedure of Example 8 part B.

### Example 13. Night Guard Cured Without a Model (Reference)

The night guard of Example 12 is warmed in water at 70°C for 2 minute, and adapted and molded to the teeth arch in patient's mouth. Then it is removed from the patient's mouth.

### Example 14. Laminated Polymeric Night Guard Having Flexible And Rigid Layers (Reference)

A shaped rigid layer of a night guard is prepared by following the procedure of Example 8 part A. 5 grams of the product composition of Example 1 is applied to the shaped rigid layer of a night guard. The applied composition is shaped using finger pressure and trimming to form a night guard. Mold release agent is applied to the incisal and occlusal surface of the opposing cast model. The night guard is examined and adjusted to fit articulator. Then the two layer night guard is cured on the cast model by following the procedure of Example 8 part B.

### Example 15. Night Guard Having Flexible And Rigid Layers Partially Cured In The Mouth

15 grams of the product composition formed by following the procedure of Example 6 is shaped into an arch and applied over teeth arch in patient's mouth. Then partially cured night guard is cured 2 minutes with a hand held curing light. 15 g of clear composition prepared by following the procedure of Example 2 is molded over the surface of the partially cured night guard arch, which is than reseated back to patient's mouth and examined. The arch is adjusted to fit the teeth surface inside the mouth. Using the handheld light this layer is cured to fix its form. The partially cured night guard arch is then removed from the mouth, and cured by following the procedure of Example 8 part B, except without a model. The night guard is then warmed in boiling water and bench cooled for 1 minute, adapted and molded to the teeth arch in the patient's mouth. It is removed from the patient's mouth after it cools to 37°C.

Prior light curable night guards include those made from polymerizable compositions, such as Triad TranSheet, sold by Dentsply International Inc and Eclipse Clear Baseplate, sold by Dentsply International Inc. For any particular shape (or geometry) flexural modulus is representative of the force required to deform (or deflect) a material. As shown in Table, at 23°C the Flexural strength and the flexural modulus for a flexible night guard prepared by following the procedure of Example 5 is less than half of the flexural strength and the flexural modulus for night guards made from Eclipse Clear Baseplate and Triad TranSheet.

**TABLE 1**

| LIGHT CURABLE NIGHT GUARDS | Flexural strength at 37°C (psi) | Flexural strength at 23°C (psi) | Flexural modulus at 37°C (psi) | Flexural modulus at 23°C (psi) |
|---|---|---|---|---|
| EXAMPLE 5 | 6.9 MPa (1,000) | 37 MPa (5,400) | 228 MPa (33,000) | 1158 MPa (168,000) |
| TRIAD TranSheet | 76 MPa (11,000) | 86 MPa (12,500) | 2275 MPa (330,000) | 2482 MPa (360,000) |
| ECLIPSE Clear Baseplate | 97 MPa (14,100) | 113 MPa (16,400) | 2523 MPa (366,000) | 2979 MPa (432,000) |

As shown in Table 1, at 37°C the flexural strength of night guards made from Eclipse Clear Baseplate and Triad TranSheet is more than ten times the flexural strength of night guards prepared by following the procedure of Example 5. Also, as shown in Table 1, at 37 °C the Flexural modulus of night guards made from Eclipse Clear Baseplate and Triad TranSheet is about ten times the Flexural modulus of night guards prepared by following the procedure of Example 5. The low Flexural strength and low Flexural modulus of night guards made in accordance with the invention enable them to be at least partially cured in the mouth and then removed from the patient's mouth without hurting the patient.

It should be understood that while the present invention has been described in considerable detail with respect to certain specific embodiments thereof, it should not be considered limited to such embodiments but may be used in other ways without departure from the scope of the appended claims.

## Claims

1. A method of shaping a dental product, comprising: shaping a light curable polymerizable composition to form a dental product, said light curable polymerizable composition being adapted to form polymeric material having a flexural modulus of less than 1.7 GPa (250,000 psi, ASTM D790(1997)) and a flexural strength of less than 55.2 MPa (8,000 psi, ASTM D790(1997)) at 37°C, said dental product being selected from the group consisting of night guard and splint, wherein said light curable polymerizable composition is partially cured in a mouth of a patient and partially cured in a light curing apparatus.

2. The method of claim 1, wherein said flexural modulus of said polymeric material and said flexural strength of said polymeric material are at least 20 percent less at 37°C than at 23°C.

3. The method of claim 2, wherein said flexural modulus of said polymeric material and said flexural strength of said polymeric material are at least 50 percent less at 37°C than at 23°C.

4. The method of claim 3, wherein said flexural modulus of said polymeric material and said flexural strength of said polymeric material are at least 70 percent less at 37°C than at 23°C.

5. The method of claim 1 or 2, wherein said polymeric material has a flexural modulus at 37°C of less than 689.5 MPa (100,000 psi, ASTM D790(1997)) and a flexural strength at 37°C of less than 34.5 MPa (5,000 psi, ASTM D790(1997)).

6. The method of claim 5, wherein said polymeric material at 37°C has a flexural modulus of less than 413.7 MPa (60,000 psi, ASTM D790(1997)) and a flexural strength of less than 20.7 MPa (3,000 psi, ASTM D790(1997)).

7. The method of any one of claims 1 to 6, wherein said polymeric material has a compliance of at least 1.45 x 10⁻⁵ N/cm² (1 x 10⁻⁵ in²/pound).

## Patentansprüche

1. Verfahren zum Formen eines Dentalproduktes, umfassend: Formen einer lichthärtenden polymerisierbaren Zusammensetzung, um ein Dentalprodukt zu bilden, wobei die lichthärtende polymerisierbare Zusammensetzung angepasst ist, Polymermaterial mit einem Biegemodul von kleiner als 1,7 GPa (250.000 psi, ASTM D790 (1997)) und einer Biegefestigkeit von kleiner als 55,2 MPa (8.000 psi, ASTM D790 (1997)) bei 37 °C zu bilden, und das Dentalprodukt ausgewählt ist aus der Gruppe bestehend aus Aufbissschiene und Zahnschiene, wobei die lichthärtende polymerisierbare Zusammensetzung teilweise im Mund eines Patienten und teilweise in einer Lichthärtungsvorrichtung ausgehärtet wird.

2. Verfahren nach Anspruch 1, wobei der Biegemodul des Polymermaterials und die Biegefestigkeit des Polymermaterials bei 37 °C mindestens 20 Prozent geringer ist als bei 23 °C.

3. Verfahren nach Anspruch 2, wobei der Biegemodul des Polymermaterials und die Biegefestigkeit des Polymermaterials bei 37 °C mindestens 50 Prozent geringer ist als bei 23 °C.

4. Verfahren nach Anspruch 3, wobei der Biegemodul des Polymermaterials und die Biegefestigkeit des Polymermaterials bei 37 °C mindestens 70 Prozent geringer ist als bei 23 °C.

5. Verfahren nach Anspruch 1 oder 2, wobei das Polymermaterial bei 37 °C einen Biegemodul von kleiner als 689,5 MPa (100.000 psi, ASTM D790 (1997)) und bei 37 °C eine Biegefestigkeit von kleiner als 34,5 MPa (5.000 psi, ASTM D790 (1997)) aufweist.

6. Verfahren nach Anspruch 5, wobei das Polymermaterial bei 37 °C einen Biegemodul von kleiner als 413,7 MPa (60.000 psi, ASTM D790 (1997)) und eine Biegefestigkeit von kleiner als 20,7 MPa (3.000 psi, ASTM D790 (1997)) aufweist.

7. Verfahren nach einem der Ansprüche 1 bis 6, wobei das Polymermaterial eine Compliance von mindestens 1,45 x 10⁻⁵ N/cm² (1 x 10⁻⁵ in²/Pfund) aufweist.

## Revendications

1. Procédé pour la mise en forme d'un produit dentaire, comprenant : la mise en forme d'une composition polymérisable durcissable à la lumière pour former un produit dentaire, ladite composition polymérisable durcissable à la lumière étant adaptée pour former un matériau polymère ayant un module de flexion inférieur à 1,7 GPa (250 000 psi, ASTM D790(1997)) et une résistance à la flexion inférieure à 55,2 MPa (8 000 psi, ASTM D790(1997)) à 37 °C, ledit produit dentaire étant choisi dans le groupe constitué d'attèle nocturne et d'attèle d'ancrage, où ladite composition polymérisable durcissable à la lumière est partiellement durcie dans la bouche d'un patient et partiellement durcie dans un appareil de photo-durcissement.

2. Procédé selon la revendication 1, dans lequel ledit module de flexion dudit matériau polymère et ladite résistance à la flexion dudit matériau polymère sont au moins 20 pour cent moindres à 37 °C qu'à 23 °C.

3. Procédé selon la revendication 2, dans lequel ledit module de flexion dudit matériau polymère et ladite résistance à la flexion dudit matériau polymère sont au moins 50 pour cent moindres à 37 °C qu'à 23 °C.

4. Procédé selon la revendication 3, dans lequel ledit module de flexion dudit matériau polymère et ladite résistance à la flexion dudit matériau polymère sont au moins 70 pour cent moindres à 37 °C qu'à 23 °C.

5. Procédé selon la revendication 1 ou 2, dans lequel ledit matériau polymère a un module de flexion à 37 °C inférieur à 689,5 MPa (100 000 psi, ASTM D790(1997)) et une résistance à la flexion à 37 °C inférieure à 34,5 MPa (5 000 psi, ASTM D790(1997)).

6. Procédé selon la revendication 5, dans lequel ledit matériau polymère à 37°C a un module de flexion inférieur à 413,7 MPa (60 000 psi, ASTM D790(1997)) et une résistance à la flexion inférieure à 20,7 MPa (3 000 psi, ASTM D790(1997)).

7. Procédé selon l'une quelconque des revendications 1 à 6, dans lequel ledit matériau polymère a une souplesse d'au moins 1,45 x 10⁻⁵ N/cm² (1 x 10⁻⁵ po²/livre).
